(19) **Europäisches Patentamt**

**European Patent Office**

**Office européen des brevets**

(11) **EP 0 564 386 B1**

(12) **FASCICULE DE BREVET EUROPEEN**

(45) Date de publication et mention
de la délivrance du brevet:
**15.05.1996 Bulletin 1996/20**

(51) Int. Cl.⁶: $C02F\ 11/06$, $C02F\ 11/02$,
$C02F\ 3/12$

(21) Numéro de dépôt: **93460014.9**

(22) Date de dépôt: **31.03.1993**

(54) **Procédé de traitement des boues par oxydation combinée chimique et biologique et installations pour la mise en oeuvre d'un tel procédé**

Vorrichtung und Anlage zur Schlammbehandlung mit kombinierter chemischer und biologischer Oxidation

Process and installation for sludge treatment by combined chemical and biological oxidation

(84) Etats contractants désignés:
**AT DE DK ES GB IT NL**

(30) Priorité: **03.04.1992 FR 9204275**

(43) Date de publication de la demande:
**06.10.1993 Bulletin 1993/40**

(73) Titulaire: **OTV(Omnium de Traitements et de Valorisation) S.A.**
**F-94417 SAINT-MAURICE CEDEX (FR)**

(72) Inventeurs:
- **Paillard, Hervé Henry**
**F-86340 Vernon (FR)**
- **Bigot, Véronique**
**F-75017 Paris (FR)**

(74) Mandataire: **Vidon, Patrice**
**Cabinet Patrice Vidon,**
**Immeuble Germanium,**
**80, Avenue des Buttes de Coesmes**
**F-35700 Rennes (FR)**

(56) Documents cités:
**EP-A- 0 217 739** **DE-A- 2 227 963**
**DE-C- 840 980**

- **PATENT ABSTRACTS OF JAPAN vol. 11, no. 24 (C-399)(2471) 23 Janvier 1987**
- **CHEMICAL ABSTRACTS, vol. 116, no. 9, 2 Mars 1992, Columbus, Ohio, US; abstract no. 90619z, page 448 ;colonne R ;**

**Description**

L'invention concerne le domaine de l'épuration des effluents constitués par exemple par les eaux urbaines ou industrielles et plus particulièrement le domaine du traitement des boues issues d'une telle épuration.

Les méthodes d'épuration classiquement utilisées pour traiter ce type d'effluents font intervenir des procédés biologiques qui reproduisent les phénomènes naturels en les accélérant. Ces méthodes aboutissent à la formation de quantité de boues importantes.

En France, la quantité de boues produite par les stations d'épuration est d'environ un million de tonnes de matières sèches par an. Environ la moitié de ces boues est valorisée dans le domaine agricole tandis que 35 % sont stockés dans les décharges. La production de ces boues étant de plus en plus importante, il est de plus en plus nécessaire que celles-ci présentent un minimum de danger pour l'environnement et la santé humaine. C'est la raison pour laquelle, une grande partie des boues produites par les stations d'épuration subissent un traitement préalable qui peut constituer notamment en :

- une aération prolongée,
- une digestion anaérobie,
- une stabilisation aérobie,
- un compostage,
- ou encore une stabilisation à la chaux.

Ces boues sont constituées d'une partie soluble et de matière sèche. Cette matière sèche comprend environ 20 % de composés minéraux et environ 80 % de matière organique dite "volatile". Le but des traitements de stabilisation de ces boues est notamment de diminuer le taux de matière sèche en oxydant la matière organique de façon à rendre celle-ci plus facilement bio-assimilable.

De plus, ces boues contiennent généralement des quantités non négligeables de germes pathogènes nocifs à la santé des personnes et/ou des animaux pouvant entrer en contact direct ou indirect avec ces boues. Un des autres buts des traitements de stabilisation de ces boues est donc de réduire la concentration de ces germes. Ainsi, dans le cadre de l'utilisation d'une biomasse thermophile, les microorganismes pathogènes sont, en partie, détruits à la température de travail de la biomasse.

Afin de stabiliser les boues issues des stations d'épurations d'effluents industriels et/ou urbains, on utilise fréquemment des procédés aérobies nécessitant un temps de séjour variant de 10 à 15 jours en fonction de la température. Lorsque les ouvrages où ont lieu cette stabilisation aérobie sont couverts et isolés, la dégradation de la matière organique provoque une augmentation de la température, ce qui accélère le processus de digestion. Le temps de séjour peut ainsi être diminué de moitié et abaissé jusqu'à 5 à 6 jours. Pour réduire davantage ce temps, il a été envisagé dans l'état de la technique d'accélérer l'hydrolyse de la matière organique en ajoutant des enzymes aux boues devant être stabilisées. Cependant, la spécificité et le prix de ces produits rend leur utilisation impossible dans des conditions de coût acceptables.

Il est par ailleurs connu que le peroxyde d'hydrogène, communément appelé eau oxygénée est un oxydant puissant de la matière organique. Ce composé comporte un pont peroxyde -O-O- caractéristique des percomposés. Cependant, les propriétés oxydantes ne résultent pas de la présence d'un atome d'oxygène actif dans la molécule. En effet, sa réactivité ionique le classe dans la catégorie des oxydants faibles que ce soient en solution aqueuse ou en milieu anhydre. Par contre, comme tous les peroxydes, il a la possibilité de participer à des réactions radicalaires s'il est associé à des catalyseurs susceptibles d'activer la production d'entités oxydantes par rupture de la liaison peroxydique.

Parmi les procédés d'oxydation radicalaire avancée incluant le peroxyde hydrogène, le système $H_2O_2/Fe^{2+}$ appliqué à pH acide (réactif de Fenton) a été le plus anciennement étudié. L'action de ce réactif de Fenton peut être schématisé par les séquences réactionnelles suivantes :

$$Fe^{2+} + H_2O_2 \rightarrow Fe^{3+} + OH \cdot + OH^-$$

$$Fe^{2+} + OH \cdot \rightarrow Fe^{3+} + OH^-$$

$$H_2O_2 + OH \cdot \rightarrow H_2O + HO_2 \cdot$$

$$H_2O_2 + HO_2 \cdot \rightarrow H_2O + OH \cdot + O_2$$

$$Fe^{2+} + HO_2 \cdot \rightarrow Fe^{3+} + HO_2^-$$

$$Fe^{3+} + HO_2 \cdot \rightarrow Fe^{2+} + O_2 + H^+$$

La réaction d'initiation produit des radicaux hydroxyles qui ont une très grande affinité électronique. Ces radicaux hydroxyles sont connus pour leur grande réactivité et leur faible sélectivité et réagissent avec de nombreux composés organiques comme :

- les composés aromatiques (benzène et ses dérivés, phénols, ...),
- les composés aliphatiques comme les alcools,
- les composés avec des liaisons multiples.

En ce qui concerne par exemple les composés aromatiques, l'action du réactif de Fenton a été particulièrement étudié sur les phénols dans le cadre du traitement des eaux phénoliques. Il a été montré que l'oxydation du phénol par le réactif de Fenton donne comme intermédiaires de réaction le catéchol et l'hydroquinone qui sont ensuite oxydés en quinones par le fer ferrique résultant de l'oxydation du fer ferreux.

Toutefois, l'oxydation de $Fe^{2+}$ par $H_2O_2$ dépend fortement du pH. La mise en oeuvre du réactif de Fenton se pratique toujours à pH inférieur ou égal à 3 afin d'éviter l'hydrolyse du fer ferrique et la précipitation. Par ailleurs, le procédé de Fenton fonctionne dans des conditions optimales avec une stoechiométrie $H_2O_2/Fe^{2+}$ supérieur à 2 moles de peroxyde d'hydrogène par mole de fer ferreux et souvent supérieur à 10 moles de peroxyde d'hydrogène par mole de fer ferreux.

Les boues issues des stations d'épuration des effluents d'origine industrielle et/ou urbaine présentent généralement un pH compris entre 5,5 et 9,5. Le traitement de stabilisation qu'elles subissent afin de pouvoir être diffusées sans danger dans l'environnement ou stockées en décharge fait généralement intervenir une biomasse. Cette biomasse ne doit pas être mise en contact avec des oxydants trop puissants qui l'inhiberaient.

L'objectif de la présente invention est de fournir un procédé de stabilisation des boues issues des processus d'épuration des effluents industriels et/ou urbains permettant de réduire les mauvaise odeurs, de détruire les germes pathogènes, de diminuer le taux de matière organique ainsi que la teneur en matière sèche contenus dans ces boues.

Un autre objectif de l'invention est de proposer un tel procédé avec un coût en réactifs chimiques faible.

Enfin, un autre objectif de l'invention est de proposer une installation pour la mise en oeuvre d'un tel procédé.

L'invention concerne un procédé de stabilisation des boues issues de l'épuration des effluents industriels et/ou urbains contenant au moins une partie de matières sèches essentiellement constituées de matières organiques fermentescibles. Le procédé est caractérisé en ce qu'il comprend les étapes consistant à :

- faire subir auxdites boues une oxydation par voie radicalaire par addition de peroxyde d'hydrogène et d'au moins un sel de fer ferreux dans des conditions permettant de floculer au moins une partie desdites matières organiques fermentescibles ;
- faire subir à ladite matière organique fermentescible préoxydée et floculée une oxydation par voie biologique.

La floculation de la matière organique est obtenue grâce au fer ferrique produit lors de la réaction de l'eau oxygénée sur le sel de fer ferreux. Elle est rendue possible par la formation d'hydroxyde ferrique. Cette réaction de peroxydo-coagulation élimine une partie de la matière organique et/ou la transforme de façon à ce que celle-ci devienne plus facilement bio-assimilable. Par ailleurs, la peroxydo-coagulation permet d'agglomérer une autre partie de la matière organique présente dans les boues sous forme de colloïdes. Cette coagulation aboutit à la formation de flocs denses.

L'utilisation du peroxyde d'hydrogène couplé à un sel de fer ferreux permet en outre de réduire significativement la quantité de bactéries pathogènes contenues dans les boues stabilisées.

D'une façon très intéressante, les flocs formés lors de ladite étape d'oxydation par voie radicalaire servent de substrat et de support à une biomasse utilisée pour ladite étape d'oxydation par voie biologique.

Préférentiellement, ladite biomasse est une biomasse thermophile aérobie.

Egalement préférentiellement, ladite étape d'oxydation par voie radicalaire et ladite étape d'oxydation biologique sont menées successivement dans le même réacteur.

Avantageusement, ladite étape d'oxydation par voie radicalaire par addition de peroxyde d'hydrogène et d'au moins un sel de fer ferreux est menée à un pH compris entre 5,5 et 9,5.

Egalement avantageusement, le ratio molaire de peroxyde d'hydrogène et de fer ferreux $H_2O_2/Fe^{2+}$ est compris entre 0,1 M $H_2O_2$/1 M $Fe^{2+}$ et 2 M $H_2O_2$/1 M $Fe^{2+}$.

D'une façon intéressante, ladite étape d'oxydation radicalaire est effectuée en utilisant une concentration molaire en peroxyde d'hydrogène au moins égale à 5 g/kg de matière sèche.

Selon une variante ladite étape de stabilisation thermophile aérobie est menée sous un débit d'air variant de 2 à 15 $m^3$/h/$m^3$ de boue traitée.

Avantageusement lesdites étapes d'oxydation radicalaire et d'oxydation biologique sont menées à une température comprise entre environ 40 °C et environ 60°C.

Préférentiellement le procédé comprend une étape complémentaire consistant à préchauffer les boues à stabiliser par échange thermique avec les boues stabilisées.

L'invention concerne également une installation pour la mise en oeuvre du procédé de stabilisation décrit. Cette installation est caractérisée en ce qu'elle comprend les éléments constitutifs suivants :

- un réacteur biologique calorifugé pouvant fonctionner en continu, présentant une canalisation d'amenée desdites boues à stabiliser ;
- un dispositif d'aération permettant d'insuffler de l'air dans ledit réacteur;
- une boucle de recirculation du contenu dudit réacteur, branchée sur le niveau bas dudit réacteur ;
- une canalisation d'amenée du peroxyde d'hydrogène et du sel de fer ferreux branchée sur ladite boucle de recirculation ;
- et une canalisation d'évacuation des boues stabilisées du réacteur.

Le branchement de la canalisation d'amenée du peroxyde d'hydrogène et du sel de fer ferreux sur la boucle de recirculation évite à la boue traitée dans le réacteur d'être directement en contact avec le peroxyde d'hydrogène qui serait susceptible d'inhiber la biomasse thermophile utilisée pour oxyder la boue traitée par voie biologique.

L'invention concerne également une autre installation pour la mise en oeuvre du procédé caractérisée en ce qu'elle comprend les éléments constitutifs suivants :

- un réacteur biologique calorifugé pouvant fonctionner en continu, présentant une canalisation d'amenée desdites boues à stabiliser et un dispositif d'agitation interne ;
- un dispositif d'aération permettant d'insuffler de l'air dans ledit réacteur;
- une canalisation d'amenée du peroxyde d'hydrogène et du sel de fer ferreux branchée sur ladite canalisation d'amenée desdites boues à stabiliser;
- et une canalisation d'évacuation des boues stabilisées.

Le dispositif d'agitation interne au réacteur permet d'assurer le brassage du contenu dudit réacteur.

Préférentiellement ladite canalisation d'évacuation des boues stabilisées est reliée à un dispositif permettant de préchauffer par échange thermique les boues à traiter entrant dans le réacteur biologique.

Egalement préférentiellement, dans le cas où l'installation comprend une boucle de recirculation, ladite boucle relie la zone inférieure à la zone supérieure dudit réacteur biologique et ledit dispositif d'injection d'air permet l'injection d'air dans la zone inférieure du réacteur de façon à minimiser le passage des flocs dans ladite boucle de recirculation.

L'invention ainsi que les différents avantages qu'elle présente seront plus facilement compris grâce à la description qui va suivre d'un exemple non limitatif de réalisation de l'invention en référence aux dessins dans lesquels :

- la figure 1 représente le diagramme de solubilité dans l'eau de $Fe(OH)_3$ amorphe à 25 °C;
- la figure 2 représente une installation pour la stabilisation de boues issues de l'épuration des effluents industriels et/ou urbains ;
- la figure 3 représente l'influence du procédé selon l'invention sur la diminution des germes contenus dans les boues traitées ;
- la figure 4 représente l'évolution du caractère de déshydratabilité des boues traitées en fonction de la quantité de réactif $H_2O_2/Fe^{2+}$ utilisée.

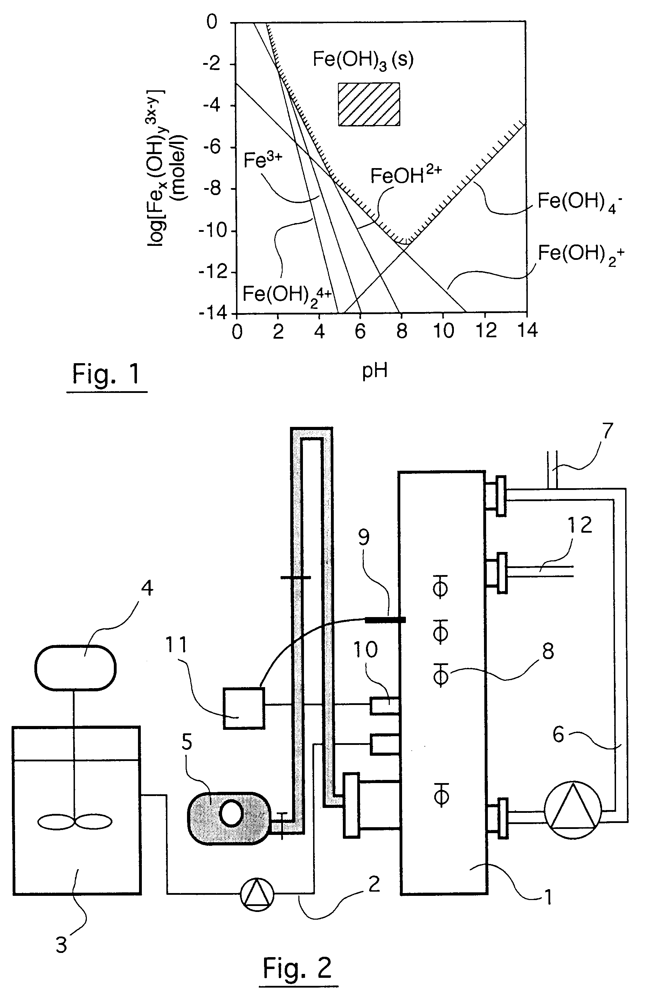

Selon la figure 1, les conditions (concentration, pH) d'utilisation du fer ferrique dans le traitement des eaux sont visualisées par des hachures. Il a été montré (STUMM et MORGAN, 1962) que les effets du fer au cours de l'étape de coagulation ne sont pas seulement apportés par les simples ions métalliques hydratés mais également par leurs produits d'hydrolyse qui sont des complexes polymérisés. Toute une série de réactions d'hydrolyse aboutit à l'hydroxyde ferrique amorphe $Fe(OH)_3$. Comme on peut le voir sur ce schéma l'hydroxyde ferrique est produit en quantité moins importante à pH très acide. Jusqu'ici l'emploi du réactif de FENTON avait donc été mené à des rapports $H_2O_2/Fe^{2+}$ très supérieurs à ceux prévus par la stoechiométrie et à pH très acide pour éviter la précipitation du fer ferrique pouvant contribuer à la lente décomposition du peroxyde d'hydrogène en excès, lors des réactions radicalaires secondaires. Selon l'invention, le procédé de peroxydo-coagulation exploite la formation de fer ferrique et le pH utilisé préférentiellement est situé dans une fourchette qui n'avait jamais été utilisée pour mettre en oeuvre le réactif de Fenton puisque l'on cherchait alors à éviter la précipitation du fer ferrique.

Selon la figure 2, un réacteur biologique pilote calorifugé 1 présentant un volume utile de 600 litres, une hauteur de 4 mètres et un diamètre de 0,5 mètres est alimenté en boues par une canalisation 2. Cette canalisation d'amenée 2 communique avec un bac de stockage 3 contenant lesdites boues et muni d'un agitateur 4. Le volume du bac de stockage 3 est de $1m^3$ et est rempli chaque jour par une boue mixte épaissie constituée à 60% de boues biologiques et à 40% de boues primaires.

L'alimentation en air du réacteur 1 est assurée par un surpresseur 5. La régulation de la température est assurée par un régulateur 11 relié à un thermostat de sécurité 10 et à une sonde de température 9. Le réacteur 1 est par ailleurs muni d'une boucle de recirculation 6 reliant la zone inférieure à la zone supérieure du réacteur et sur laquelle est branchée une canalisation d'amenée 7 des réactifs chimiques constitués par du peroxyde d'hydrogène et du sulfate de fer ferreux heptahydraté. Le réacteur présente par ailleurs plusieurs prises d'échantillons 8 permettant de suivre l'évolution de l'opération de stabilisation des boues.

L'installation représentée à la figure 1 a été mise en oeuvre pour stabiliser des boues issues d'une station d'épuration d'effluents de provenance urbaine et industrielle et en particulier des effluents issus d'industries agro-alimentaires. Les effluents de cette station présentent les concentrations moyennes cités dans le tableau I.

(MS: matière sèche,
DBO : demande biologique en oxygène,
DCO : demande chimique en oxygène.)

Tableau I

| MS | 376 mg/l |
|-----|-----------|
| DBO | 920 mg/l |
| DCO | 1 550 mg/l |

Les boues produites à la suite du traitement d'épuration sont fortement organiques puisqu'elles contiennent entre 70 et 75 % de matières volatiles par rapport aux matières sèches dont la concentration est comprise entre 25 et 30 g/l. Le principal inconvénient de cette teneur importante en matière organique est la difficulté pour obtenir la siccité souhaitée des boues après déshydratation mécanique.

Les conditions de fonctionnement de l'installation lors des différents essais sont résumées dans le tableau II. (TS : Temps de Séjour dans le réacteur, Qair : Quantité d'air apportée par le surpresseur, Qboue : Quantité de boue traitée par jour dans le réacteur).

Tableau II

| n° essai | T °C | TS jour | Réactifs g/kg MS | Qair Nm3/h | Qboue m3/jour | Charge appliquée kg MS/m3.jour |
|----------|------|---------|------------------|------------|---------------|--------------------------------|
| 1 | 50 | 2 | 0 | 5 | 0,3 | 12,5 |
| 2 | 50 | 2 | 0 | 10 | 0,3 | 9,3 |
| 3 | 50 | 2 | 5 | 10 | 0,3 | 12,6 |
| 4 | 50 | 2 | 10 | 10 | 0,3 | 11,0 |
| 5 | 50 | 2 | 20 | 10 | 0,3 | 12,0 |

Les doses de réactifs (peroxyde d'hydrogène et sel de fer ferreux) sont exprimées en gramme de peroxyde ou de fer par kilogramme de matière sèche à traiter, le rapport massique $H_2O_2/Fe^{2+}$ étant égal à 1.

Les différents essais pratiqués ont permis de constater que l'utilisation des réactifs (peroxyde d'hydrogène et sel de fer ferreux) selon l'invention a un effet très significatif sur la réduction des odeurs, sur la réduction du taux de germes pathogènes et sur la déshydratabilité des boues stabilisées. De plus, l'invention permet de réduire de façon sensible la DCO soluble des boues traitées.

Le tableau III indique la concentration en $H_2S$ émis par les boues après une semaine de stockage en atmosphère close. Les autres composés soufrés responsables des odeurs étant émis à des concentrations très faibles, le taux de $H_2S$ est le composé principalement responsable de celles-ci. Dans le tableau III, Co indique la concentration en $H_2S$ de la boue stabilisée entrant dans l'installation et C la concentration en $H_2S$ de la boue stabilisée.

Tableau III

| Réactifs g/kg MS | (H2S) 7 jours boue entrée | (H2S) 7 jours boue sortie | $\Delta$C 7 jours d'élimination | log (Cou/C) 7 jours |
|---|---|---|---|---|
| 0 | 236000 | 142000 | 40 | 0,2 |
| 5 | 425549 | 153929 | 64 | 0,4 |
| 10 | 397168 | 517 | 100 | 2,9 |
| 20 | 531300 | 3000 | 99 | 2,2 |

Les doses de réactifs (peroxyde d'hydrogène et sel de fer ferreux) sont exprimées en gramme de peroxyde ou de fer par kilogramme de matière sèche à traiter, le rapport massique $H_2O_2/Fe^{2+}$ étant égal à 1.

Les résultats montrent que l'ajout des réactifs a un effet important sur la réduction du taux de $H_2S$ et donc sur la réduction des odeurs. Cet effet est particulièrement marqué lorsque la concentration en réactifs est au moins égale à 10 grammes par kilogramme de matière sèche. On obtient alors une élimination de la quasi-totalité des émissions soufrées et ainsi des odeurs.

Le tableau IV indique le pourcentage d'abattement des germes indicateurs de pollution fécale en fonction du taux de réactifs. Cet abattement est exprimé en log Co/C ou Co est la concentration en germes des boues à l'entrée de l'installation et C la concentration en germes à la sortie de l'installation.

Tableau IV

| Réactifs g/kg MS | 0 | 5 | 10 | 20 |
|---|---|---|---|---|
| germes totaux 20°C/72 h. | 0,7 | 0,8 | 1,9 | 3,3 |
| germes totaux 37°C/24 h. | 1,1 | 2,0 | 1,6 | 3,7 |
| coliformes totaux | -0,3 | 0,4 | 3,9 | 3,9 |
| coliformes fécaux | 0,3 | 0,9 | 4,0 | 3,0 |
| streptocoques fécaux | 0,5 | 1,2 | 3,1 | 3,1 |
| spores clostridiums sulfatoréducteurs. | -3,9 | 0,2 | 0,6 | 2,5 |

Les doses de réactifs péroxyde d'hydrogène et sel de fer ferreux) sont exprimées en gramme de peroxyde ou de fer par kilogramme de matière sèche à traiter, le rapport massique $H_2O_2/Fe^{2+}$ étant égal à 1.

Bien que les boues arrivant au niveau de l'installation présentent des concentrations en germes différentes d'un essai à l'autre, on peut noter, en moyenne, une augmentation de l'élimination des coliformes, des streptocoques et surtout des spores des clostridiums sulfatoréducteurs. L'élimination de ces germes augmente avec la quantité de réactifs ajoutée.

L'efficacité bactéricide du procédé peut être exprimée par la relation suivante :

$$\ln No/N = K \exp (B.C)$$

dans laquelle :

No est le nombre de germes présents dans la boue entrante
N est le nombre de germes présents dans la boue traitée
K est un facteur variant avec la température ;
B est une constante ;
et C est la concentration en réactifs ($H_2O_2/Fe^{2+}$).

Les valeurs de K et de B sont regroupées dans le tableau V. Elles ont été obtenues pour une température constante de 50°C.

Tableau V

|  | B | K |
|---|---|---|
| germes totaux 20°C/72 h. | 0,08 | 72 |
| germes totaux 37°C/24 h. | 0,06 | 2,66 |
| coliformes totaux | 0,13 | 0,91 |
| coliformes fécaux | 0,12 | 1,03 |
| streptocoques fécaux | 0,08 | 1,51 |
| spores clos. sulfatoréducteurs | 0,17 | 0,19 |

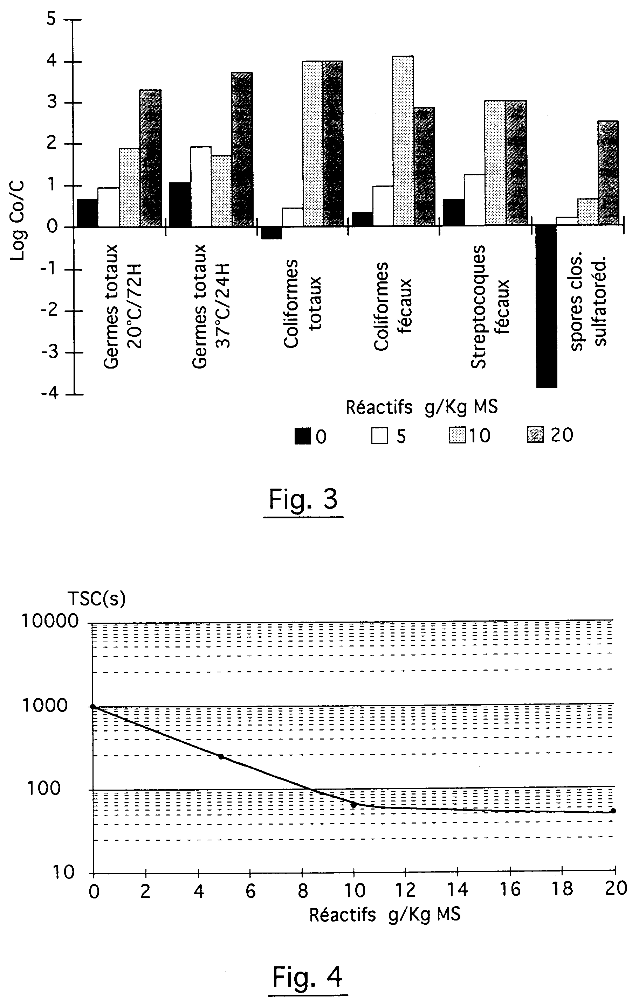

Les résultats obtenus par la mise en oeuvre du procédé selon l'invention sur la réduction du taux de bactéries sont également exprimés sur le graphique de la figure 3 selon lequel l'élimination des germes indicateurs de pollution fécale est indiquée, à l'échelle logarithmique, pour des essais menés à une température de 50°C,un temps de séjour de 2 jours et un débit d'air de 10 mètres cube par heure. Ce graphique laisse apparaître une élimination maximale des streptocoques fécaux et des coliformes totaux à partir d'une concentration de réactifs de 10g/kg MS et une élimination maximale des clostridiums pour une concentration en réactifs de 20g/kg MS.

L'utilisation du procédé selon l'invention permet également d'augmenter la déshydratabilité des boues traitées et ainsi d'obtenir un produit présentant une siccité importante susceptible de le rendre plus facile à évacuer en décharge ou en épandage agricole. La déshydratabilité de la boue peut être déterminée par son Temps de Succion Capillaire (TSC). Selon une méthode couramment utilisée, pour mesurer le TSC on dépose 5cm$^3$ de boue sur un papier filtre absorbant et on mesure le temps de passage du liquide entre deux électrodes. Plus le TSC est faible, plus la boue est facilement filtrable. Le TSC est de l'ordre de 10 secondes lorsque la boue est correctement stabilisée.

La figure 4 représente l'évolution à l'échelle logarithmique du TSC en fonction de la concentration en réactifs. Cette évolution a été suivie à une température de 50°C,pour un temps de séjour en réacteur de 2 jours et sous un débit d'air de 10m$^3$/h. L'action des réactifs apparait très nettement, en particulier lorsque leur concentration est au moins égale à 10 grammes par kilogramme de matière sèche.

Le procédé de stabilisation des boues selon l'invention présente de plus l'avantage de réduire sensiblement la DCO soluble. Le tableau VI visualise le rendement moyen d'élimination de la matière organique sur des essais menés à une température de 50 °C pour un temps de séjour en réacteur de 2 jours et sous un débit d'air de 10m$^3$/h. (MV : matières volatiles, DCO$_t$ : Demande Chimique en Oxygène Totale, DCO$_s$ : Demande Chimique en Oxygène Soluble).

Tableau VI

| Réactifs g/kg MS | 0 | 5 | 10 | 20 |
|---|---|---|---|---|
| MV | 25 | 25 | 26 | 26 |
| DCOt | 41 | 52 | 44 | 42 |
| DCOs | 53 | 73 | 83 | 76 |

Les doses de réactifs (peroxyde d'hydrogène et sel de fer ferreux) sont expiées en gramme de peroxyde ou de fer par kilogramme de matière sèche à traiter, le rapport massique $H_2O_2/Fe^{2+}$ étant égal à 1.

L'exemple de mise en oeuvre du procédé et de l'installation selon l'invention ici décrit ne vise en aucun cas à réduire la portée ou à limiter celle-ci. Il pourra ainsi notamment être envisagé d'utiliser une aération supérieure ou inférieure à 10 mètres cube par heure, en fonction de la nature des boues à stabiliser, de façon à maintenir l'oxygénation à une valeur nécessaire et suffisante pour ne pas limiter l'action de la biomasse thermophile présente dans le réacteur. Par ailleurs, il pourra être envisagé d'utiliser des taux de réactifs différents en fonction de la nature des boues, et particulièrement de leur teneur en matière organique, afin de ménager un compromis entre le coût induit par l'utilisation de ces réactifs et les résultats souhaités sur la réduction des odeurs, sur la réduction des germes et sur l'augmentation de la déshydratabilité des boues traitées.

**Revendications**

1. Procédé de stabilisation des boues issues de l'épuration des effluents industriels et/ou urbains contenant au moins une partie de matières sèches essentiellement constituées de matières organiques fermentescibles caractérisé en ce qu'il comprend les étapes consistant à :

   - faire subir auxdites boues une oxydation par voie radicalaire par addition de peroxyde d'hydrogène et d'au moins un sel de fer ferreux dans des conditions permettant de floculer au moins une partie desdites matières organiques fermentescibles ;
   - faire subir à ladite matière organique fermentescible préoxydée et floculée une oxydation par voie biologique.

2. Procédé de stabilisation de boues selon la revendication 1 caractérisé en ce que les flocs formés lors de ladite étape d'oxydation par voie radicalaire servent de substrat et de support à une biomasse utilisée pour ladite étape d'oxydation par voie biologique.

3. Procédé de stabilisation de boues selon la revendication 2 caractérisé en ce que ladite biomasse est une biomasse thermophile aérobie.

4. Procédé de stabilisation de boues selon l'une des revendications 1 à 3 caractérisé en ce que ladite étape d'oxydation par voie radicalaire et ladite étape d'oxydation biologique sont menées successivement dans le même réacteur.

5. Procédé de stabilisation de boues selon l'une des revendications 1 à 4 caractérisé en ce que ladite étape d'oxydation par voie radicalaire par addition de peroxyde d'hydrogène et d'au moins un sel de fer ferreux est menée à un pH compris entre 5,5 et 9,5.

6. Procédé de stabilisation de boues selon l'une des revendications 1 à 5 caractérisé en ce que le ratio molaire de peroxyde d'hydrogène et de fer ferreux $H_2O_2/Fe^{2+}$ est compris entre 0,1 M $H_2O_2$/1 M $Fe^{2+}$ et 2 M $H_2O_2$/1 M $Fe^{2+}$.

7. Procédé de stabilisation de boues selon l'une des revendications 1 à 6 caractérisé en ce que ladite étape d'oxydation radicalaire est effectuée en utilisant une concentration en peroxyde d'hydrogène au moins égale à 5 g/kg de matière sèche.

8. Procédé de stabilisation de boues selon l'une des revendications 1 à 7 caractérisé en ce que ladite étape de stabilisation thermophile aérobie est menée sous un débit d'air variant de 2 à 15 $m^3/h/m^3$ de boue traitée.

9. Procédé de stabilisation de boues selon l'une des revendications 3 à 8 caractérisé en ce que lesdites étapes d'oxydation radicalaire et d'oxydation biologique sont menées à une température comprise entre environ 40 °C et environ 60°C.

10. Procédé de stabilisation de boues selon l'une des revendications 3 à 9 caractérisé en ce qu'il comprend une étape complémentaire consistant à préchauffer les boues à stabiliser par échange thermique avec les boues stabilisées.

11. Installation pour la mise en oeuvre du procédé de stabilisation selon l'une des revendications 1 à 10 caractérisée en ce qu'elle comprend les éléments constitutifs suivants :

    - un réacteur biologique calorifugé (1) pouvant fonctionner en continu, présentant une canalisation d'amenée (2) desdites boues à stabiliser ;
    - un dispositif d'aération (5) permettant d'insuffler de l'air dans ledit réacteur (1) ;
    - une boucle de recirculation (6) du contenu dudit réacteur (1) branchée sur le niveau bas dudit réacteur (1);
    - une canalisation (7) d'amenée du peroxyde d'hydrogène et du sel de fer ferreux branchée sur ladite boucle de recirculation (6);
    - et une canalisation d'évacuation (12) des boues stabilisées.

12. Installation pour la mise en oeuvre du procédé de stabilisation selon l'une des revendications 1 à 10 caractérisée en ce qu'elle comprend les éléments constitutifs suivants :

    - un réacteur biologique calorifugé (1) pouvant fonctionner en continu, présentant une canalisation d'amenée (2) desdites boues à stabiliser et un dispositif d'agitation interne ;
    - un dispositif d'aération (5) permettant d'insuffler de l'air dans ledit réacteur (1) ;

- une canalisation (7) d'amenée du peroxyde d'hydrogène et du sel de fer ferreux branchée sur ladite canalisation d'amenée (2) desdites boues à stabiliser;
- et une canalisation d'évacuation (12) des boues stabilisées.

13. Installation selon l'une des revendications 11 ou 12 caractérisée en ce que ladite canalisation d'évacuation (12) des boues stabilisées est reliée à un dispositif permettant de préchauffer par échange thermique les boues à traiter entrant dans le réacteur biologique (1).

14. Installation selon l'une des revendication 11 ou 13 caractérisée en ce que ladite boucle de recirculation (6) relie la zone inférieure à la zone supérieure dudit réacteur biologique (1) et en ce que ledit dispositif d'injection d'air (5) permet l'injection d'air dans la zone inférieure du réacteur de façon à minimiser le passage des flocs dans ladite boucle de recirculation (6).

## Claims

1. Stabilisation process for sludge derived from the purification of industrial and/or urban effluents containing at least a part of dry matter substantially consisting of fermentable organic matter, characterised in that it comprises stages consisting of:

   - subjecting the said sludge to oxidation by radical means by addition of hydrogen peroxide and at least a ferrous iron salt in conditions allowing the flocculation of at least a part of the said fermentable organic matter;
   - subjecting the pre-oxidised; and flocculated said fermentable organic matter to oxidation by biological means.

2. Stabilisation process for sludge according to Claim 1, characterised in that the flocks formed by the said stage of oxidation by radical means serve as a substrate and support for a biomass used for the said stage of oxidation by biological means.

3. Stabilisation process for sludge according to Claim 2, characterised in that the said biomass is an aerobic thermophilic biomass.

4. Stabilisation process for sludge according to one of the Claims 1 to 3, characterised in that the said stage of oxidation by radical means and the said stage of oxidation by biological means are carried out in succession in the same reactor.

5. Stabilisation process for sludge according to one of the Claims 1 to 4, characterised in that the said stage of oxidation by radical means by addition of hydrogen peroxide and at least a ferrous iron salt is conducted at a pH between 5.5 and 9.5.

6. Stabilisation process for sludge according to one of the Claims 1 to 5, characterised in that the molar ratio of the hydrogen peroxide and the ferrous iron salt $H_2O_2/Fe^{2+}$ is between 0.1M $H_2O_2$/ 1M $Fe^{2+}$ and 2M $H_2O_2$/ 1M $Fe^{2+}$.

7. Stabilisation process for sludge according to one of the Claims 1 to 6, characterised in that the said stage of radical oxidation is carried out using a hydrogen peroxide concentration at least equal to 5 gm/kg of dry matter.

8. Stabilisation process for sludge according to one of the Claims 1 to 7, characterised in that the said stage of aerobic thermophilic stabilisation is conducted with an air flow rate varying from 2 to 15 $m^3/h/m^3$ of treated sludge.

9. Stabilisation process for sludge according to one of the Claims 3 to 8, characterised in that the said stages of radical oxidation and biological oxidation are conducted at a temperature between around 40°C and around 60°C.

10. Stabilisation process for sludge according to one of the Claims 3 to 9, characterised in that it includes a complementary step consisting of preheating the sludge to be stabilised by thermal exchange with the stabilised sludge.

11. Installation for the implementation of the stabilisation process according to one of the Claims 1 to 10, characterised in that it comprises the following constituent elements:

    - a lagged biological reactor (1) capable of functioning continuously and having a feed pipe (2) for the said sludge to be stabilised;
    - an aeration device (5) allowing injection of air into the said reactor (1);

- a recirculation loop (6) for the contents of the said reactor (1) connected to the lower level of the said reactor (1);
- a feed pipe (7) for hydrogen peroxide and the ferrous iron salt connected to the said recirculation loop (6);
- and a discharge pipe (12) for the stabilised sludge.

12. Installation for the implementation of the stabilisation process according to one of the Claims 1 to 10, characterised in that it comprises the following constituent elements:

- a lagged biological reactor (1) capable of functioning continuously and having a feed pipe (2) for the said sludge to be stabilised and an internal agitation device;
- an aeration device (5) allowing injection of air into the said reactor (1);
- a feed pipe (7) for hydrogen peroxide and the ferrous iron salt connected to the said feed pipe (2) for the said sludge to be stabilised;
- and a discharge pipe (12) for the stabilised sludge.

13. Installation according to one of the Claims 11 or 12, characterised in that the said discharge pipe (12) for the stabilised sludge is linked to a device allowing preheating by thermal exchange of the sludge to be stabilised which is entering the biological reactor (1).

14. Installation according to one of the Claims 11 or 13, characterised in that the said recirculation loop (6) links the lower zone to the upper zone of the biological reactor (1) and in that the said device for the injection of air (5) allows the injection of air into the lower zone of the reactor such as to minimise the passage of flocks into the said recirculation loop (6).

## Patentansprüche

1. Verfahren zum Stabilisieren der Klärschlämme von industriellen und/oder städtischen Abwässern, die wenigstens einen Teil trockener Substanzen enthalten, welche im wesentlichen aus gärbaren organischen Stoffen bestehen, dadurch gekennzeichnet, daß es die folgenden Schritte umfaßt:

- die Klärschlämme werden einer radikalartigen Oxydation durch Zugabe von Wasserstoffperoxyd und mindestens einem Eisen(II)-Salz unterzogen, unter Bedingungen, die das Ausflocken von mindestens einem Teil der gärbaren organischen Stoffe ermöglichen;

- die gärbaren organischen Stoffe werden auf biologischem Weg oxydiert, nachdem sie voroxydiert und ausgeflockt wurden.

2. Verfahren zum Stabilisieren von Klärschlämmen gem, Anspruch 1, dadurch gekennzeichnet, daß die bei der radikalartigen Oxydation gebildeten Flocken einer Biomasse als Substrat und Unterlage dienen, die beim biologischen Oxydationsschritt verwendet wird.

3. Verfahren zum Stabilisieren von Klärschlämmen gem, Anspruch 2, dadurch gekennzeichnet, daß es sich bei der Biomasse um eine thermophile aerobische Biomasse handelt.

4. Verfahren zum Stabilisieren von Klärschlämmen gem, einem der Ansprüche 1 bis 3, dadurch gekennzeichnet, daß der radikalartige Oxydationsschritt und der biologische Oxydationsschritt nacheinander im selben Reaktor durchgeführt werden.

5. Verfahren zum Stabilisieren von Klärschlämmen gem, einem der Ansprüche 1 bis 4, dadurch gekennzeichnet, daß der radikalartige Oxydationsschritt durch Zugabe von Wasserstoffperoxyd und von mindestens einem Eisen(II)-Salz bei einem PH-Wert zwischen 5,5 und 9,5 durchgeführt wird.

6. Verfahren zum Stabilisieren von Klärschlämmen gem, einem der Ansprüche 1 bis 5, dadurch gekennzeichnet, daß das molare Verhältnis zwischen Wasserstoffperoxyd und Eisen(II) $H_2O_2/Fe^{2+}$ zwischen 0.1 M $H_2O_2$/1 M $Fe^{2+}$ und 2 M $H_2O_2$/1 M $Fe^{2+}$ liegt.

7. Verfahren zum Stabilisieren von Klärschlämmen gem, einem der Ansprüche 1 bis 6, dadurch gekennzeichnet, daß der radikalartige Oxydationsschritt mit einer Konzentration an Wasserstoffperoxyd von mindestens 5g/kg Trockenstoff erfolgt.

8. Verfahren zum Stabilisieren von Klärschlämmen gem, einem der Ansprüche 1 bis 7,
dadurch gekennzeichnet, daß der thermophile aerobische Stabilisierungsschritt unter einem Luftdurchsatz von 2 bis 15 m$^3$/h/m$^3$ erfolgt.

9. Verfahren zum Stabilisieren von Klärschlämmen gem. einem der Ansprüche 3 bis 8,
dadurch gekennzeichnet, daß die radikalartigen und biologischen Oxydationsschritte bei Temperaturen zwischen ca. 40 °C und ca. 60 °C durchgeführt werden.

10. Verfahren zum Stabilisieren von Klärschlämmen gem. einem der Ansprüche 3 bis 9,
dadurch gekennzeichnet, daß es einen zusätzlichen Schritt umfaßt, welcher im vorherigen Aufheizen der zu stabilisierenden Klärschlämme durch Wärmeaustausch mit den stabilisierten Schlämmen besteht.

11. Anlage zur Verwirklichung des Stabilisierungsverfahrens gemäß einem der Ansprüche 1 bis 10,
dadurch gekennzeichnet, das sie aus folgenden Komponenten zusammengesetzt ist:

- einem wärmegedämmten biologischen Reaktor (1), der kontinuierlich betrieben werden kann, der eine Leitung (2) für die Zufuhr der zu stabilisierenden Schlämme aufweist;

- einer Belüftungseinrichtung (5), die das Einblasen von Luft in diesen Reaktor (1) ermöglicht;

- einer Rezirkulierungsschleife (6) für den Inhalt des Reaktors (1), die am niedrigen Pegel des Reaktors (1) angeschlossen ist;

- einer Leitung (7) für die Zufuhr des Wasserstoffperoxyds und des Eisen(II)-Salzes, die an die Rezirkulierungsschleife (6) angeschlossen ist;

- einer Abflußleitung (12) für die stabilisierten Klärschlämme.

12. Anlage zur Verwirklichung des Stabilisierungsverfahrens gemäß einem der Ansprüche 1 bis 10,
dadurch gekennzeichnet, das sie aus folgenden Komponenten zusammengesetzt ist:

- einem wärmegedämmten biologischen Reaktor (1), der kontinuierlich betrieben werden kann, der eine Leitung (2) für die Zufuhr der zu stabilisierenden Schlämme und eine inneres Rührwerk aufweist;

- einer Belüftungseinrichtung (5), die das Einblasen von Luft in diesen Reaktor (1) ermöglicht;

- einer Leitung (7) für die Zufuhr des Wasserstoffperoxyds und des Eisen(II)-Salzes, die an die Zufuhrleitung (2) der zu stabilisierenden Klärschlämme angeschlossen ist;

- einer Abflußleitung (12) für die stabilisierten Klärschlämme.

13. Anlage gemäß einem der Ansprüche 11 oder 12,
dadurch gekennzeichnet, daß die Abflußleitung (12) für die stabilisierten Klärschlämme mit einer Vorrichtung verbunden ist, die das Vorheizen der zu behandelnden Klärschlämme, die in den biologischen Reaktor (1) eintreten, durch Wärmetausch ermöglicht.

14. Anlage gemäß einem der Ansprüche 11 oder 13,
dadurch gekennzeichnet, daß die Rezirkulierungsschleife (6) den unteren Bereich mit dem oberen Bereich des biologischen Reaktors (1) verbindet und, daß die Belüftungseinrichtung (5) das Einblasen von Luft in den unteren Bereich des Reaktors ermöglicht, um den Übergang der Flocken in die Rezirkulierungsschleife (6) zu minimieren.

Fig. 1

Fig. 2

Fig. 3

Fig. 4